# EUROPÄISCHE PATENTSCHRIFT

(11) **EP 3 150 414 B1**
(45) Veröffentlichungstag und Bekanntmachung des Hinweises auf die Patenterteilung: **10.10.2018**
(21) Anmeldenummer: 16001862.8
(22) Anmeldetag: 24.08.2016
(51) Int. Cl.: B60J 5/06, E05D 15/06

(54) **FÜHRUNGSVORRICHTUNG, INSBESONDERE LINEARFÜHRUNG, FÜR EINE FAHRZEUG-TÜRKONSTRUKTION**
GUIDING DEVICE, IN PARTICULAR LINEAR GUIDE, FOR A VEHICLE DOOR CONSTRUCTION
DISPOSITIF DE GUIDAGE, EN PARTICULIER GUIDAGE LINEAIRE POUR UNE CONSTRUCTION DE PORTE DE VEHICULE

(30) Priorität: 28.09.2015 DE 102015012461
(43) Veröffentlichungstag der Anmeldung: 05.04.2017
(73) Patentinhaber: MAN Truck & Bus AG, 80995 München (DE)
(72) Erfinder: Schilling, Fabrice, 07546 Gera (DE); Schöller, Michael, 82166 Gräfelfing (DE)
(74) Vertreter: v. Bezold & Partner Patentanwälte - PartG mbB

(56) Entgegenhaltungen:
- EP-A1- 0 610 822
- EP-A2- 2 371 653
- DE-U1-202012 100 077

## Beschreibung

Die Erfindung betrifft eine Führungsvorrichtung für eine Fahrzeug-Türkonstruktion, insbesondere eine Omnibus-Türkonstruktion. Die Führungsvorrichtung ist insbesondere als Linearführung ausgeführt. Die Türkonstruktion ist insbesondere eine zweckmäßig zweiflügelige Innenschwenktürkonstruktion.

EP 2 371 653 A2 offenbart eine Türkonstruktion mit einer Öffnung und einem die Öffnung überspannenden Abdeckelement. Linearführungen für Fahrzeug-Innenschwenktürkonstruktionen sind im Stand der Technik in den unterschiedlichsten Ausführungsformen bekannt. Die Linearführungen umfassen oftmals eine in Höhenrichtung offene Führungsöffnung zum Führen einer Steuerkabel-haltenden Führungseinrichtung, z. B. einer Rollen- oder Kulissensteinkonstruktion. Nachteilig daran ist, dass über die Führungsöffnung mittels einer Klimaanlage klimatisierte Luft von einem Luftkanal in den Fahrzeuginnenraum eindringen kann.

Eine Aufgabe der Erfindung ist es, eine Möglichkeit zu schaffen, mittels der ein Eindringen klimatisierter Luft aus einem Luftkanal über eine Führungsöffnung in einen Fahrzeuginnenraum zumindest reduziert, vorzugsweise im Wesentlichen gänzlich verhindert werden kann.

Diese Aufgabe wird mit den Merkmalen des Hauptanspruchs gelöst. Vorteilhafte Weiterbildungen der Erfindung können den Unteransprüchen und der folgenden Beschreibung bevorzugter Ausführungsformen der Erfindung entnommen werden.

Die Erfindung schafft eine Führungsvorrichtung für eine Fahrzeug-Türkonstruktion, vorzugsweise eine Omnibus-Türkonstruktion. Die Türkonstruktion ist vorzugsweise als Innenschwenktür-Konstruktion ausgeführt, insbesondere zweiflügelige Innenschwenktür-Konstruktion.

Die Führungsvorrichtung ist vorzugsweise eine Linearführung und wird deshalb nachfolgend unter Bezugnahme auf eine Linearführung im Speziellen beschrieben, gleichwohl die Beschreibung bzw. Offenbarung auch für eine Führungsvorrichtung im Allgemeinen gilt.

Die Linearführung dient zweckmäßig zur Positionierung zwischen einen Luftkanal zum Führen von mittels einer Klimaanlage klimatisierter Luft und einen Fahrzeuginnenraum (z. B. einen Fahrgastraum) und umfasst zweckmäßig eine Führungsöffnung (z. B. eine Lachlochkonstruktion) zum Führen einer zweckmäßig geführten Führungseinrichtung (z. B. einer Rollen- oder Kulissenstein-Konstruktion). Die Führungseinrichtung ist vorzugsweise eine ein Steuerkabel-haltende Führungseinrichtung.

Die Linearführung zeichnet sich insbesondere dadurch aus, dass die Führungsöffnung durch ein Abdeckelement überspannt wird, um einen Luftdurchtritt vom Luftkanal in den Fahrzeuginnenraum über die Führungsöffnung zumindest zu reduzieren, vorzugsweise im Wesentlichen zu verhindern.

Es ist möglich, dass ein Steuerkabel (z. B. eine Steuerleitung) abschnittsweise innerhalb des Abdeckelements verläuft.

Das Steuerkabel ist vorzugsweise an der Führungseinrichtung gehaltert und wird folglich insbesondere während eines Öffnungs- und Schließvorgangs der Fahrzeug-Türkonstruktion von der Führungseinrichtung bewegt.

Das Steuerkabel wird vorzugsweise von der Führungseinrichtung während eines Öffnungs- und Schließvorgangs der Fahrzeug-Türkonstruktion entlang der Führungsöffnung bewegt.

Das Steuerkabel kann z. B. innerhalb des Abdeckelements über eine Festmachkonstruktion abschnittsweise zweckmäßig am Abdeckelement fixiert sein und/oder abschnittsweise relativ zum Abdeckelement verformbar, z. B. lose, verlaufen.

Das Steuerkabel kann sich während eines Öffnungs- und Schließvorgangs der Fahrzeug-Türkonstruktion vorzugsweise innerhalb des Abdeckelements zweckmäßig verformen.

Das Steuerkabel kann zweckmäßig innerhalb des Abdeckelements zumindest einen Richtungswechsel aufweisen.

Das Steuerkabel kann sich z. B. während eines Öffnungs- und Schließvorgangs der Fahrzeug-Türkonstruktion, insbesondere verursacht durch eine Bewegung der Führungseinrichtung, innerhalb des Abdeckelements verformen und die Verformung des Steuerkabels kann zweckmäßig durch das Abdeckelement geführt, insbesondere begrenzt werden.

Insbesondere kann sich das Steuerkabel innerhalb des Abdeckelements z. B. an dem Abdeckelement auf- und abrollen. Alternativ oder ergänzend können Innenflächen des Abdeckelements als zweckmäßig seitliche Führungsflächen für das Steuerkabel dienen, so dass eine während eines Öffnungs- und Schließvorgangs der Fahrzeug-Türkonstruktion insbesondere seitliche Verformung des Steuerkabels durch die Innenflächen begrenzbar ist.

Das Abdeckelement kann folglich als Führungselement für ein sich während eines Öffnungs- und Schließvorgangs der Fahrzeug-Türkonstruktion innerhalb des Abdeckelements verformendes Steuerkabel dienen.

Das Abdeckelement dient folglich vorzugsweise nicht nur dazu, einen Luftdurchtritt zwischen dem Luftkanal und dem Fahrzeuginnenraum zu verhindern, sondern kann darüber hinaus eine prozesssichere (Steuer-) Kabelführung sicherstellen.

Es ist möglich, dass das Steuerkabel zumindest abschnittsweise außerhalb entlang des Abdeckelements verläuft. Dabei ist es möglich, dass das Abdeckelement außen eine Halterungseinrichtung zum Halten des Steuerkabels aufweist.

Das Steuerkabel ist insbesondere an der Führungseinrichtung gehaltert und kann z. B. während eines Öffnungs- und Schließvorgangs der Fahrzeug-Türkonstruktion durch die Führungseinrichtung entlang der Führungsöffnung bewegt werden.

Das Steuerkabel kann z. B. über eine erste Öffnung im Abdeckelement in das Abdeckelement hineingeführt sein und über eine zweite Öffnung im Abdeckelement aus dem Abdeckelement hinausgeführt sein. Eine Öffnung kann z. B. an der Unterseite des Abdeckelements ausgebildet sein und/oder eine Öffnung kann an einem Längsseitenende des Abdeckelements ausgebildet sein. Auch andere Kombinationen sind möglich.

Es ist möglich, dass das Abdeckelement abschnittsweise die Führungseinrichtung aufnimmt, so dass die Führungseinrichtung abschnittsweise in das Abdeckelement hinein ragen kann. Somit kann das Abdeckelement zweckmäßig einen Aufnahmeraum für einen Abschnitt der Führungseinrichtung bilden.

Das Abdeckelement verjüngt sich vorzugsweise von unten nach oben, insbesondere kann es spitz nach oben zulaufen.

Das Abdeckelement ist zweckmäßig als Abdeckkappe oder Abdeckgehäuse ausgebildet.

Das Abdeckelement kann insbesondere als zweckmäßig formstabiles Hohlkörperelement ausgebildet sein.

Das Abdeckelement kann z. B. als Blech- oder Kunststoffformteil ausgebildet sein.

Es ist möglich, dass das Abdeckelement aus zumindest zwei aneinander montierbaren Teilabschnitten ausgebildet ist, vorzugsweise zumindest zwei aneinander montierbaren Halbschalen.

Das Abdeckelement umfasst vorzugsweise eine offene Unterseite. Die offene Unterseite überspannt vorzugsweise die Führungsöffnung zweckmäßig in deren Längs- und/oder Querrichtung. Alternativ oder ergänzend kann sich die Führungseinrichtung und/oder das Steuerkabel über die Unterseite abschnittsweise in das Abdeckelement hinein erstrecken.

Es ist möglich, dass die Linearführung zusätzlich zu dem Abdeckelement zumindest einen Abdichtklotz, z. B. Schaumklotz, zum Abdichten der Führungsöffnung aufweist.

Das Abdeckelement ist vorzugsweise über der Führungsöffnung angeordnet und kann z. B. die Führungsöffnung in deren Längs- und Querrichtung im Wesentlichen vollständig überspannen.

Das Steuerkabel ist vorzugsweise ein flexibles, signalübertragendes und/oder mehradriges Kabel.

Das Steuerkabel dient insbesondere zur Übertragung von Signalen an einzelne Verbraucher und/oder Sensoren (z. B. Heizscheibe, Spiegelheizung und/oder Türöffnungstaster) und/oder die Fingerschutzeinrichtung in der Hauptschließkante der Türflügel.

Zu erwähnen ist noch, dass die Führungsöffnung vorzugsweise in Höhenrichtung (Z-Richtung) offen ausgeführt ist, so dass z. B. ohne Abdeckelement ein Luftdurchtritt vom Luftkanal in den Fahrzeuginnenraum möglich wäre.

Die Fahrzeug-Türkonstruktion ist vorzugsweise eine z. B. zweiflügelige Innenschwenktür-Konstruktion.

Die Erfindung ist nicht auf eine Führungsvorrichtung beschränkt, sondern umfasst auch einen Omnibus mit einer Führungsvorrichtung wie hierin offenbart.

Die Führungsvorrichtung, der Luftkanal und/oder das Abdeckelement sind vorzugsweise im Dachvoutenbereich des Omnibusses angeordnet.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsform der Erfindung in Verbindung mit den beigefügten Figuren.
- Figur 1: zeigt eine Schnittansicht einer Führungsvorrichtung gemäß einer Ausführungsform der Erfindung,
- Figur 2: zeigt eine perspektivische Ansicht der Führungsvorrichtung der Figur 1 und
- Figur 3: zeigt eine Teilansicht eines Abdeckelements gemäß einer Ausführungsform der Erfindung.

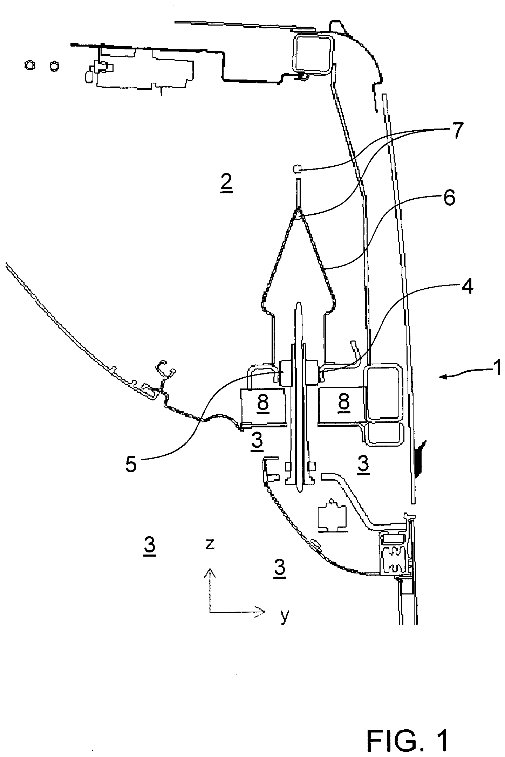

Figur 1 zeigt eine Schnittansicht einer Führungsvorrichtung 1 in Form einer Linearführung für eine Fahrzeug-Türkonstruktion, insbesondere eine Omnibus-Innenschwenktür-Konstruktion.

Die Linearführung 1 dient zur Positionierung zwischen einen Luftkanal 2 zum Führen von mittels einer Klimaanlage klimatisierter Luft und einen davon zweckmäßig separierten Fahrzeuginnenraum 3, z. B. einen Omnibus-Fahrgastraum.

Die Linearführung 1 umfasst zunächst wie üblich eine langlochförmige, in Z-Richtung offene Führungsöffnung 4 zum Führen einer geführten Führungseinrichtung 5, z. B. einer Rollen- oder Kulissenstein-Konstruktion.

Die Führungsöffnung 4 wird durch ein Abdeckelement 6 überspannt, so dass ein Luftdurchtritt vom Luftkanal 2 in den Fahrzeuginnenraum 3 über die Führungsöffnung 4 zumindest reduziert wird, vorzugsweise im Wesentlichen gänzlich vermieden wird.

Das Abdeckelement 6 ist über der Führungsöffnung 4 angeordnet und überspannt die Führungsöffnung 4 zweckmäßig vollständig in deren Längs- und Querrichtung.

Das Abdeckelement 6 ist als formstabile, hohle Abdeckkappe (Abdeckgehäuse) in Form eines Blech- oder Kunststoffformteils ausgebildet und weist zwei aneinander montierbare Teilabschnitte (in Figur 1 einen rechten Teilabschnitt und einen linken Teilabschnitt) auf.

Das Abdeckelement 6 umfasst eine offene Unterseite. Die offene Unterseite überspannt die Führungsöffnung 4 in deren Längs- und Querrichtung. Außerdem ragt die Führungseinrichtung 5 abschnittsweise über die Unterseite in das Abdeckelement 6 hinein.

Die Linearführung 1 umfasst zusätzlich zu dem Abdeckelement 6 Abdichtklötze 8 zum Abdichten der Führungsöffnung 4.

Ein Steuerkabel 7 ist innerhalb und außerhalb an dem Abdeckelement 6 befestigt. Das Steuerkabel 7 ist zudem an der Führungseinrichtung 5 befestigt, so dass es während eines Öffnungs- und Schließvorgangs der Fahrzeug-Türkonstruktion durch die Führungseinrichtung 5 entlang der Führungsöffnung 4 bewegt wird.

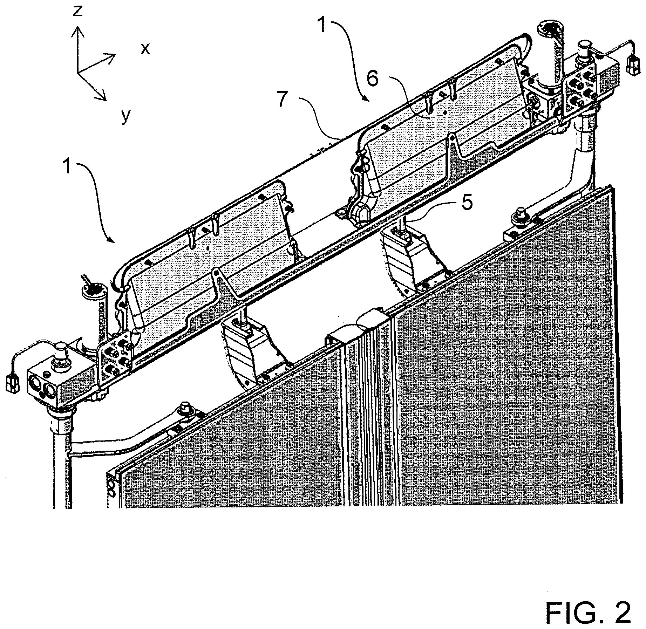

Figur 2 zeigt eine perspektivische Ansicht der Linearführung 1 der Figur 1.

Figur 2 kann insbesondere entnommen werden, dass das Abdeckelement 6 insbesondere für Linearführungen 1 für sogenannte Innenschwenktürkonstruktionen mit zwei Türflügeln dient. So kann insbesondere ein Abdeckelement für die Linearführung für den einen Türflügel und ein Abdeckelement für die Linearführung für den anderen Türflügel verwendet werden. Es ist allerdings im Rahmen der Erfindung ebenfalls möglich, dass ein Abdeckelement sowohl die Führungsöffnung für den einen Türflügel als auch die Führungsöffnung für den anderen Türflügel überspannt.

Zum Öffnen und Schließen der Türflügel können die Führungseinrichtungen zusammen mit den Steuerkabeln entlang der Führungsöffnungen bewegt werden, was insoweit allerdings üblich ist.

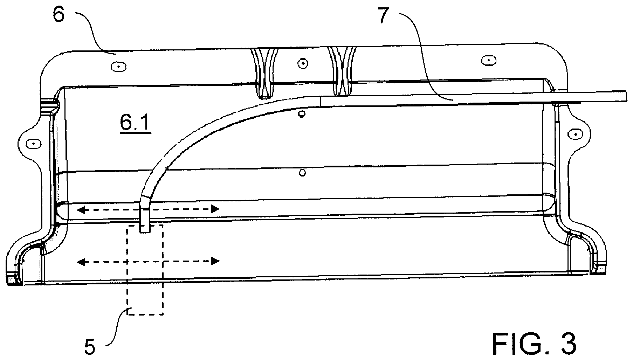

Figur 3 zeigt eine Teilansicht (Innenansicht) des Abdeckelements 6, insbesondere eines der zwei aneinander montierbaren Teilabschnitte des Abdeckelements 6.

Das Steuerkabel 7 ist innerhalb des Abdeckelements 6 über eine nicht näher gezeigte Festmachkonstruktion am Abdeckelement 6 abschnittsweise fixiert. Zugleich ist das Steuerkabel 7 innerhalb des Abdeckelements 6 abschnittsweise verformbar angeordnet.

Wenn die Fahrzeug-Türkonstruktion geöffnet und geschlossen wird, bewegt sich die Führungseinrichtung 5 entlang der Führungsöffnung 4, so dass sich dadurch das Steuerkabel 7 innerhalb des Abdeckelements 6 verformt, was in Figur 3 durch die zwei Doppelpfeile schematisch angedeutet ist. Dabei dient das Abdeckelement 6 als Führungselement für das sich verformende Steuerkabel 7.

So kann sich das Steuerkabel 7 zweckmäßig innerhalb des Abdeckelements 6 während eines Öffnungs- und Schließvorgangs der Fahrzeug-Türkonstruktion auf- und abrollen (in Figur 3 oben, nach links bzw. rechts). Zugleich ist das Abdeckelement 6 relativ schmal ausgeführt und umfasst Innenflächen 6.1, die als seitliche Führungsflächen für das Steuerkabel 7 dienen, so dass eine während eines Öffnungs- und Schließvorgangs der Fahrzeug-Türkonstruktion innerhalb des Abdeckelements 6 stattfindende Verformung bzw. Bewegung des Steuerkabels 7 durch die Innenflächen 6.1 begrenzt werden kann. Dadurch kann ein Abknicken oder anderweitiges Beschädigen des Steuerkabels 7 durch die Öffnungs- und Schließvorgänge der Fahrzeug-Türkonstruktion vermieden werden.

Das Abdeckelement 6 dient folglich einerseits als Abdichtelement und andererseits als Führungselement für ein sich während eines Öffnungs- und Schließvorgangs der Fahrzeug-Türkonstruktion innerhalb des Abdeckelements 6 verformendes Steuerkabel 7.

Bei der in Figur 3 gezeigten Ausführungsform des Abdeckelements 6 ist das Steuerkabel 7 über die Unterseite und ein Längsseitenende des Abdeckelements 6 in das Abdeckelement 6 hinein- bzw. hinausgeführt. Es sind allerdings auch Ausführungsformen möglich, in denen das Steuerkabel 7 z. B. über die Unterseite hinein- und hinausgeführt ist oder z. B. über die Unterseite hinein- und über eine Seitenwand des Abdeckelements hinausgeführt ist. Auch andere Kombinationen sind möglich.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von in Bezug genommenen Merkmalen und Ansprüchen.

### Bezugszeichenliste

- 1: Führungsvorrichtung, insbesondere Linearführung
- 2: Luftkanal
- 3: Fahrzeuginnenraum
- 4: Führungsöffnung
- 5: Zweckmäßig geführte Führungseinrichtung, z. B. Rollen- oder Kulissenstein-Konstruktion
- 6: Abdeckelement
- 6.1: Abdeckelement-Innenflächen
- 7: Steuerkabel
- 8: Abdichtklötze

## Patentansprüche

1. Führungsvorrichtung (1) für eine Fahrzeug-Türkonstruktion, vorzugsweise Omnibus-Türkonstruktion, und zur Positionierung zwischen einen Luftkanal (2) für mittels einer Klimaanlage klimatisierter Luft und einen Fahrzeuginnenraum (3), mit einer Führungsöffnung (4) zum Führen einer zweckmäßig geführten Führungseinrichtung (5), wobei die Führungsöffnung (4) durch ein Abdeckelement (6) überspannt wird, um einen Luftdurchtritt vom Luftkanal (2) in den Fahrzeuginnenraum (3) über die Führungsöffnung (4) zumindest zu reduzieren, **dadurch gekennzeichnet, dass** ein Steuerkabel (7) abschnittsweise innerhalb des Abdeckelements (6) verläuft, und/oder die Führungsvorrichtung (1) zwischen dem Luftkanal (2) und dem Fahrzeuginnenraum (3) positioniert ist.

2. Führungsvorrichtung (1) nach Anspruch 1, **dadurch gekennzeichnet, dass** das Steuerkabel (7) innerhalb des Abdeckelements (6) über eine Festmachkonstruktion abschnittsweise fixiert ist und/oder relativ zum Abdeckelement (6) abschnittsweise verformbar angeordnet ist.

3. Führungsvorrichtung (1) nach einem der vorhergehenden Ansprüche, **dadurch gekennzeichnet, dass** das Steuerkabel (7) innerhalb des Abdeckelements (6) zumindest einen Richtungswechsel aufweist und/oder sich während eines Öffnungs- und Schließvorgangs der Fahrzeug-Türkonstruktion innerhalb des Abdeckelements (6) verformt, insbesondere verursacht durch eine Bewegung der Führungseinrichtung (5).

4. Führungsvorrichtung (1) nach einem der vorhergehenden Ansprüche, **dadurch gekennzeichnet, dass** das Steuerkabel (7) während eines Öffnungs- und Schließvorgangs der Fahrzeug-Türkonstruktion innerhalb des Abdeckelements (6) eine Verformung erfährt und die Verformung durch das Abdeckelement (6) geführt wird.

5. Führungsvorrichtung (1) nach einem der vorhergehenden Ansprüche, **dadurch gekennzeichnet, dass** das Steuerkabel (7) innerhalb des Abdeckelements (6) auf- und abrollbar ist und/oder Innenflächen (6.1) des Abdeckelements (6) als seitliche Führungsflächen für das Steuerkabel (7) dienen.

6. Führungsvorrichtung (1) nach einem der vorhergehenden Ansprüche, **dadurch gekennzeichnet, dass** das Abdeckelement (6) außen eine Halterungseinrichtung zum Haltern eines Steuerkabels (7) aufweist.

7. Führungsvorrichtung (1) nach einem der vorhergehenden Ansprüche, **dadurch gekennzeichnet, dass** das Steuerkabel (7) an der Führungseinrichtung (5) gehaltert ist und während eines Öffnungs- und Schließvorgangs der Fahrzeug-Türkonstruktion durch die Führungseinrichtung (5) entlang der Führungsöffnung (4) bewegt wird.

8. Führungsvorrichtung (1) nach einem der vorhergehenden Ansprüche, **dadurch gekennzeichnet, dass** das Abdeckelement (6) abschnittsweise die Führungseinrichtung (5) aufnimmt.

9. Führungsvorrichtung (1) nach einem der vorhergehenden Ansprüche, **dadurch gekennzeichnet, dass** das Abdeckelement (6) als Abdeckkappe oder Abdeckgehäuse ausgebildet ist.

10. Führungsvorrichtung (1) nach einem der vorhergehenden Ansprüche, **dadurch gekennzeichnet, dass** das Abdeckelement (6) als formstabiles Hohlkörperelement ausgebildet ist.

11. Führungsvorrichtung (1) nach einem der vorhergehenden Ansprüche, **dadurch gekennzeichnet, dass** das Abdeckelement (6) als Blech- oder Kunststoffformteil ausgebildet ist.

12. Führungsvorrichtung (1) nach einem der vorhergehenden Ansprüche, **dadurch gekennzeichnet, dass** das Abdeckelement (6) aus zumindest zwei aneinander montierbaren Teilabschnitten ausgebildet ist, vorzugsweise zumindest zwei aneinander montierbaren Halbschalen.

13. Führungsvorrichtung (1) nach einem der vorhergehenden Ansprüche, **dadurch gekennzeichnet, dass** das Abdeckelement (6) eine offene Unterseite aufweist und die Führungseinrichtung (5) und/oder das Steuerkabel (7) sich über die Unterseite in das Abdeckelement (6) hinein erstreckt.

14. Führungsvorrichtung (1) nach einem der vorhergehenden Ansprüche, **dadurch gekennzeichnet, dass** die Führungsvorrichtung (1) zusätzlich zu dem Abdeckelement (6) zumindest einen Abdichtklotz (8) zum Abdichten der Führungsöffnung (4) aufweist.

15. Führungsvorrichtung (1) nach einem der vorhergehenden Ansprüche, **dadurch gekennzeichnet, dass** das Abdeckelement (6) über der Führungsöffnung (4) angeordnet ist und/oder die Führungsöffnung (4) vollständig in deren Längs- und Querrichtung überspannt.

16. Führungsvorrichtung (1) nach einem der vorhergehenden Ansprüche, **dadurch gekennzeichnet, dass** die Führungsvorrichtung (1) eine Linearführung ist.

17. Omnibus, mit einer Führungsvorrichtung (1) nach einem der vorhergehenden Ansprüche.

18. Omnibus nach Anspruch 17, **dadurch gekennzeichnet, dass** die Führungsvorrichtung (1), der Luftkanal (2) und/oder das Abdeckelement (6) im Dachvoutenbereich des Omnibusses angeordnet ist.

## Claims

1. Guide device (1) for a vehicle door construction, preferably bus door construction, and for positioning between an air duct (2) for air climatized by means of an air-conditioning system and a vehicle interior (3), with a guide opening (4) for guiding an expediently guided guide apparatus (5), wherein the guide opening (4) is spanned by a covering element (6) in order to at least reduce a passage of air from the air duct (2) into the vehicle interior (3) via the guide opening (4), **characterized in that** a control cable (7) runs in sections inside the covering element (6), and/or the guide device (1) is positioned between the air duct (2) and the vehicle interior (3).

2. Guide device (1) according to Claim 1, **characterized in that** the control cable (7) is fixed in sections within the covering element (6) via a securing construction and/or is arranged to be deformable in sections relative to the covering element (6).

3. Guide device (1) according to either of the preceding claims, **characterized in that** the control cable (7) has within the covering element (6) at least one change in direction and/or deforms during an opening and closing process of the vehicle door construction within the covering element (6), in particular caused by a movement of the guide apparatus (5).

4. Guide device (1) according to any one of the preceding claims, **characterized in that** the control cable (7) undergoes a deformation during an opening and closing process of the vehicle door construction within the covering element (6) and the deformation is guided by the covering element (6).

5. Guide device (1) according to any one of the preceding claims, **characterized in that** the control cable (7) can be rolled up and down within the covering element (6) and/or inner surfaces (6.1) of the covering element (6) serve as lateral guide surfaces for the control cable (7).

6. Guide device (1) according to any one of the preceding claims, **characterized in that** the covering element (6) has on the outside a mounting apparatus for mounting a control cable (7).

7. Guide device (1) according to any one of the preceding claims, **characterized in that** the control cable (7) is mounted on the guide apparatus (5) and is moved along the guide opening (4) by the guide apparatus (5) during an opening and closing process of the vehicle door construction.

8. Guide device (1) according to any one of the preceding claims, **characterized in that** the covering element (6) receives in sections the guide apparatus (5).

9. Guide device (1) according to any one of the preceding claims, **characterized in that** the covering element (6) is formed as a covering cap or covering housing.

10. Guide device (1) according to any one of the preceding claims, **characterized in that** the covering element (6) is formed as a dimensionally stable hollow body element.

11. Guide device (1) according to any one of the preceding claims, **characterized in that** the covering element (6) is formed as a sheet metal or plastic formed part.

12. Guide device (1) according to any one of the preceding claims, **characterized in that** the covering element (6) is formed from at least two sub-sections which can be mounted on one another, preferably at least two half shells which can be mounted on one another.

13. Guide device (1) according to any one of the preceding claims, **characterized in that** the covering element (6) has an open underside and the guide apparatus (5) and/or the control cable (7) extends across the underside into the covering element (6).

14. Guide device (1) according to any one of the preceding claims, **characterized in that** the guide device (1) has, in addition to the covering element (6), at least one sealing block (8) for sealing off the guide opening (4).

15. Guide device (1) according to any one of the preceding claims, **characterized in that** the covering element (6) is arranged above the guide opening (4) and/or fully spans the guide opening (4) in its longitudinal and transverse direction.

16. Guide device (1) according to any one of the preceding claims, **characterized in that** the guide device (1) is a linear guide.

17. Bus, with a guide device (1) according to any one of the preceding claims.

18. Bus according to Claim 17, **characterized in that** the guide device (1), the air duct (2) and/or the covering element (6) is arranged in the roof space region of the bus.

## Revendications

1. Dispositif de guidage (1) pour structure de porte de véhicule, de préférence structure de porte d'omnibus, et destiné à être positionné entre un canal à air (2) pour de l'air climatisé au moyen d'un climatiseur et un espace intérieur de véhicule (3), comportant une ouverture de guidage (4) pour le guidage d'un appareil de guidage (5) guidé judicieusement, l'ouverture de guidage (4) étant pontée par un élément de recouvrement (6) afin au moins de réduire un passage d'air du canal à air (2) vers l'espace intérieur du véhicule (3) par l'ouverture de guidage (4), **caractérisé en ce qu'**un câble de commande (7) s'étend par sections à l'intérieur de l'élément de recouvrement (6), et/ou le dispositif de guidage (1) est positionné entre le canal à air (2) et l'espace intérieur du véhicule (3).

2. Dispositif de guidage (1) selon la revendication 1, **caractérisé en ce que** le câble de commande (7) est fixé par sections dans l'élément de recouvrement (6) par une structure d'immobilisation et/ou est disposé de manière à être déformable par sections par rapport à l'élément de recouvrement (6).

3. Dispositif de guidage (1) selon une des revendications précédentes, **caractérisé en ce que** le câble de commande (7) présente au moins un changement de direction dans l'élément de recouvrement (6) et/ou se déforme pendant une opération d'ouverture et de fermeture de la structure de porte de véhicule dans l'élément de recouvrement (6), en particulier en raison d'un mouvement de l'appareil de guidage (5).

4. Dispositif de guidage (1) selon une des revendications précédentes, **caractérisé en ce que** le câble de commande (7) subit une déformation pendant une opération d'ouverture et de fermeture de la structure de porte de véhicule dans l'élément de recouvrement (6) et la déformation est dirigée par l'élément de recouvrement (6).

5. Dispositif de guidage (1) selon une des revendications précédentes, **caractérisé en ce que** le câble de commande (7) est déroulable ou enroulable dans l'élément de recouvrement (6) et/ou que des surfaces internes (6.1) de l'élément de recouvrement (6) font office de surfaces de guidage latérales pour le câble de commande (7).

6. Dispositif de guidage (1) selon une des revendications précédentes, **caractérisé en ce que** l'élément de recouvrement (6) présente à l'extérieur un dispositif de retenue pour la retenue d'un câble de commande (7).

7. Dispositif de guidage (1) selon une des revendications précédentes, **caractérisé en ce que** le câble de commande (7) est retenu au niveau de l'appareil de guidage (5) et est déplacé pendant une opération d'ouverture et de fermeture de la structure de porte de véhicule par l'appareil de guidage (5) le long de l'ouverture de guidage (4).

8. Dispositif de guidage (1) selon une des revendications précédentes, **caractérisé en ce que** l'élément de recouvrement (6) reçoit le appareil de guidage (5) par sections.

9. Dispositif de guidage (1) selon une des revendications précédentes, **caractérisé en ce que** l'élément de recouvrement (6) se présente sous forme d'un capot de recouvrement ou d'un boîtier de recouvrement.

10. Dispositif de guidage (1) selon une des revendications précédentes, **caractérisé en ce que** l'élément de recouvrement (6) se présente sous forme d'un élément à corps creux de forme stable.

11. Dispositif de guidage (1) selon une des revendications précédentes, **caractérisé en ce que** l'élément de recouvrement (6) se présente sous forme d'une pièce en tôle ou en plastique.

12. Dispositif de guidage (1) selon une des revendications précédentes, **caractérisé en ce que** l'élément de recouvrement (6) est constitué d'au moins deux sous-sections pouvant être montées l'une sur l'autre, de préférence de deux demi-coques pouvant être montées l'une sur l'autre.

13. Dispositif de guidage (1) selon une des revendications précédentes, **caractérisé en ce que** l'élément de recouvrement (6) présente une face inférieure ouverte et l'appareil de guidage (5) et/ou le câble de commande (7) s'étend par sa face inférieure dans l'élément de recouvrement (6).

14. Dispositif de guidage (1) selon une des revendications précédentes, **caractérisé en ce que** le dispositif de guidage (1) présente en plus de l'élément de recouvrement (6) au moins un bloc d'étanchéité (8) pour colmater l'ouverture de guidage (4).

15. Dispositif de guidage (1) selon une des revendications précédentes, **caractérisé en ce que** l'élément de recouvrement (6) est disposé au-dessus de l'ouverture de guidage (4) et/ou ponte entièrement l'ouverture de guidage (4) dans sa direction longitudinale et transversale.

16. Dispositif de guidage (1) selon une des revendications précédentes, **caractérisé en ce que** le dispositif de guidage (1) est un guide linéaire.

17. Omnibus comportant un dispositif de guidage (1) selon une des revendications précédentes.

18. Omnibus selon la revendication 17, **caractérisé en ce que** le dispositif de guidage (1), le canal à air (2) et/ou l'élément de recouvrement (6) sont disposés au niveau de la voûte du toit de l'omnibus.
